# EUROPÄISCHE PATENTSCHRIFT

(11) **EP 4 056 819 B1**
(45) Veröffentlichungstag und Bekanntmachung des Hinweises auf die Patenterteilung: **24.07.2024**
(21) Anmeldenummer: 22155518.8
(22) Anmeldetag: 08.02.2022
(51) Int. Cl.: F01N 3/20, F01N 3/28, F01N 3/035, F01N 13/00, B01F 23/213, B01F 25/314, B01F 25/422

(54) **ABGAS/REAKTIONSMITTEL-MISCHANORDNUNG**
EXHAUST GAS/REACTION AGENT MIXING ASSEMBLY
AGENCEMENT DE MÉLANGE DE GAZ D'ÉCHAPPEMENT/AGENT DE RÉACTION

(30) Priorität: 10.03.2021 DE 102021105724
(43) Veröffentlichungstag der Anmeldung: 14.09.2022
(73) Patentinhaber: Purem GmbH, 66539 Neunkirchen (DE)
(72) Erfinder: Kast, Peter, Esslingen (DE)
(74) Vertreter: Ruttensperger Lachnit Trossin Gomoll

(56) Entgegenhaltungen:
- EP-A1- 3 726 017
- EP-A1- 3 757 364
- WO-A1-2016/142417
- US-A1- 2020 131 974
- US-A1- 2020 347 767

## Beschreibung

Die vorliegende Erfindung betrifft eine Abgas/Reaktionsmittel-Mischanordnung für eine Abgasanlage einer Brennkraftmaschine, beispielsweise in einem Fahrzeug, mit welcher das von der Brennkraftmaschine ausgestoßene Abgas effizient mit in das Abgas eingespritztem Reaktionsmittel, beispielsweise einer Harnstoff/WasserLösung, durchmischt werden kann.

Zur Verringerung des Stickoxidanteils in von einer Diesel-Brennkraftmaschine ausgestoßenem Abgas ist es bekannt, in einer SCR-Katalysatoranordnung eine selektive katalytische Reduktion durchzuführen. Dazu wird stromaufwärts der SCR-Katalysatoranordnung ein Reaktionsmittel, beispielsweise eine Harnstoff/WasserLösung, in das Abgas eingespritzt. Vor dem Einleiten in die SCR-Katalysatoranordnung muss eine effiziente Durchmischung von Abgas und Reaktionsmittel erfolgen. Dabei besteht das Problem, dass beispielsweise bedingt durch eine Kondensation des im Allgemeinen in flüssiger Form eingespritzten Reaktionsmittels an einer Innenoberfläche eines den Abgasstrom führenden Gehäuses flüssiges Reaktionsmittel sich ansammeln und Ablagerungen bilden kann. Eine nicht ausreichende Durchmischung von Abgas und Reaktionsmittel kann weiter dazu führen, dass ein Teil des flüssigen Reaktionsmittels in die SCR-Katalysatoranordnung gelangt und somit für eine effiziente Durchführung einer katalytischen Reaktion im Wesentlichen nicht zur Verfügung steht. Die Gefahr einer nicht ausreichenden Durchmischung von Reaktionsmittel und Abgas ist vor allem dann gegeben, wenn für einen kompakten Aufbau einer Abgasanlage der Abstand zwischen dem Ort, an welchem das Reaktionsmittel beispielsweise im Wesentlichen orthogonal zum Abgasstrom eingespritzt wird, und der SCR-Katalysatoranordnung in Strömungsrichtung vergleichsweise gering ist.

Eine Abgas/Reaktionsmittel-Mischanordnung gemäß dem Oberbegriff des Anspruchs 1 ist aus der EP 3 757 364 A1 bekannt.

Es ist die Aufgabe der vorliegenden Erfindung, eine Abgas/Reaktionsmittel-Mischanordnung vorzusehen, welche bei kompaktem Aufbau eine effiziente Durchmischung von Abgas und Reaktionsmittel gewährleistet.

Erfindungsgemäß wird diese Aufgabe gelöst durch eine Abgas/Reaktionsmittel-Mischanordnung für eine Abgasanlage einer Brennkraftmaschine zur Durchmischung von Abgas und Reaktionsmittel gemäß Anspruch 1. Diese Abgas/Reaktionsmittel-Mischanordnung umfasst:
- ein in Richtung einer Gehäuselängsachse sich erstreckendes Abgasführungsgehäuse mit einer Gehäusewand, wobei in dem Abgasführungsgehäuse ein von der Gehäusewand umgebener und von Abgas durchströmbarer Abgaskanal gebildet ist,
- ein zwischen einer stromaufwärtigen Stirnwand und einer stromabwärts bezüglich der stromaufwärtigen Stirnwand angeordneten stromabwärtigen Stirnwand gebildete Mischzone, wobei die Mischzone eine erste Kammer und eine zweite Kammer umfasst,
- eine an dem Abgasführungsgehäuse getragene Reaktionsmittelabgabeanordnung zur Abgabe von Reaktionsmittel in die erste Kammer in einer im Wesentlichen entlang einer Reaktionsmittelabgabelinie orientierten Reaktionsmittel-Hauptabgaberichtung,

wobei in der stromaufwärtigen Stirnwand wenigstens eine erste Einströmöffnung vorgesehen ist, wobei über die wenigstens eine erste Einströmöffnung ein stromaufwärts bezüglich der stromaufwärtigen Stirnwand liegender Bereich des Abgaskanals zu der ersten Kammer offen ist,
wobei in der stromaufwärtigen Stirnwand wenigstens eine zweite Einströmöffnung vorgesehen ist, wobei über die wenigstens eine zweite Einströmöffnung der stromaufwärts bezüglich der stromaufwärtigen Stirnwand liegende Bereich des Abgaskanals zu der zweiten Kammer offen ist,
wobei in der stromabwärtigen Stirnwand wenigstens eine erste Ausströmöffnung vorgesehen ist, wobei über die wenigstens eine erste Ausströmöffnung die erste Kammer zu einem stromabwärts bezüglich der stromabwärtigen Stirnwand liegenden Bereich des Abgaskanals offen ist,
wobei in der stromabwärtigen Stirnwand wenigstens eine zweite Ausströmöffnung vorgesehen ist, wobei über die wenigstens eine zweite Ausströmöffnung die zweite Kammer zu dem stromabwärts bezüglich der stromabwärtigen Stirnwand liegenden Bereich des Abgaskanals offen ist.

Durch die Aufteilung der zwischen den beiden Stirnwänden begrenzten Mischzone in zwei Kammern und das Einspritzen von Reaktionsmittel in eine dieser beiden Kammern werden einerseits die Durchmischung unterstützende Strömungsbedingungen geschaffen. Andererseits kann durch die geometrische Anordnung der beiden Kammern bezüglich einander dafür gesorgt werden, dass diejenige Kammer, in welche das Reaktionsmittel eingespritzt wird, also die erste Kammer, durch die zweite Kammer nach außen bzw. bezüglich der Gehäusewand in weiten Bereichen abgeschirmt ist. Die Gefahr einer Kondensation von Reaktionsmittel an einer die erste Kammer umgrenzenden Wand kann dadurch gemindert werden.

Um die beiden Kammern der Mischzone funktional voneinander zu trennen, besteht zwischen der ersten Kammer und der zweiten Kammer im Wesentlichen keine Strömungsverbindung. Es ist darauf hinzuweisen, dass die beiden Kammern nicht notwendigerweise vollständig gasdicht voneinander getrennt werden müssen. Gasleckagen beispielsweise dort, wo die Kammern voneinander trennende bzw. begrenzenden Wände aneinander anschließen, beeinträchtigen die Funktionalität der erfindungsgemäßen Abgas/Reaktionsmittel-Mischanordnung nicht.

Wenn in der stromaufwärtigen Stirnwand wenigstens zwei erste Einströmöffnungen vorgesehen sind, wobei in Umfangsrichtung beidseits der Reaktionsmittelabgabelinie jeweils wenigstens eine erste Einströmöffnung vorgesehen ist, ist dafür gesorgt, dass ein zwischen den ersten Einströmöffnungen gebildeter Steg in der ersten Stirnwand den in die erste Kammer eingespritzten Reaktionsmittelstrom gegen die direkte Anströmung mit Abgas abschirmt, so dass der Reaktionsmittelstrom definiert in die erste Kammer eingeleitet werden kann.

Für eine über den Querschnitt der Abgas/Reaktionsmittel-Mischanordnung gleichmäßige Durchmischung von Abgas und Reaktionsmittel wird vorgeschlagen, dass die in Umfangsrichtung beidseits der Reaktionsmittelabgabelinie vorgesehenen ersten Einströmöffnungen zu einer die Reaktionsmittelabgabelinie und die Gehäuselängsachse enthaltenden Ebene im Wesentlichen spiegelsymmetrisch angeordnet sind.

Für die gleichmäßige Abgabe des Gemisches aus Abgas und Reaktionsmittel in den Abgaskanal können in der stromabwärtigen Stirnwand wenigstens zwei erste Ausströmöffnungen vorgesehen sein, wobei in Umfangsrichtung beidseits der Reaktionsmittelabgabelinie jeweils wenigstens eine erste Ausströmöffnung vorgesehen ist.

Auch hierbei ist es vorteilhaft, wenn die in Umfangsrichtung beidseits der Reaktionsmittelabgabelinie vorgesehenen ersten Ausströmöffnungen zu der die Reaktionsmittelabgabelinie und die Gehäuselängsachse enthaltenden Ebene im Wesentlichen spiegelsymmetrisch angeordnet sind.

Um einen direkten Hindurchtritt von Abgas durch die Mischzone in Richtung der Gehäuselängsachse zu verhindern, kann vorgesehen sein, dass in Umfangsrichtung an wenigstens einer, vorzugsweise jeder Seite der Reaktionsmittelabgabelinie die ersten Einströmöffnungen näher an der Reaktionsmittelabgabelinie angeordnet sind, als die ersten Ausströmöffnungen, oder/und dass in Umfangsrichtung an wenigstens einer, vorzugsweise jede Seite der Reaktionsmittelabgabelinie zwischen den ersten Einströmöffnungen und den ersten Ausströmöffnungen jeweils eine zwischen der stromaufwärtigen Stirnwand und der stromabwärtigen Stirnwand sich erstreckende, vorzugsweise an die Gehäusewand anschließende Leitwand angeordnet ist.

Für eine effiziente Vermischung von Abgas und Reaktionsmittel in der ersten Kammer kann zwischen den in Umfangsrichtung beidseits der Reaktionsmittelabgabelinie angeordneten Leitwänden ein in der Reaktionsmittel-Hauptabgaberichtung sich verjüngender erster Kammerbereich der ersten Kammer gebildet sein, wobei der erste Kammerbereich an einer Übergangsöffnung zu einem zweiten Kammerbereich der ersten Kammer offen ist, wobei der zweite Kammerbereich ausgehend von der Übergangsöffnung zwischen dem ersten Kammerbereich und dem zweiten Kammerbereich beidseits der Reaktionsmittelabgabelinie zu den ersten Ausströmöffnungen führt.

Wenn der erste Kammerbereich oder/und der zweite Kammerbereich zu der die Reaktionsmittelabgabelinie und die Gehäuselängsachse enthaltenden Ebene im Wesentlichen spiegelsymmetrisch angeordnet ist, wird eine über den Querschnitt der Mischzone gleichmäßige Mischcharakteristik unterstützt.

Um die beiden Kammern der Mischzone voneinander zu trennen, kann eine die erste Kammer von der zweiten Kammer trennende, zwischen der stromaufwärtigen Stirnwand und der stromabwärtigen Stirnwand sich erstreckende Trennwand vorgesehen sein. Um dabei die erste Kammer durch die zweite Kammer nach außen thermisch abzuschirmen, ist es besonders vorteilhaft, wenn die Trennwand die erste Kammer nach radial außen zur zweiten Kammer begrenzt.

Beispielsweise kann die Trennwand sich zwischen den Leitwänden im Wesentlichen in Umfangsrichtung entlang der Gehäusewand erstrecken, so dass auch die beiden Leitwände die Trennung der beiden Kammern der Mischzone voneinander unterstützen bzw. die zweite Kammer in Umfangsrichtung begrenzen. Dabei kann auch die Trennwand zu der die Reaktionsmittelabgabelinie und die Gehäuselängsachse enthaltenden Ebene im Wesentlichen spiegelsymmetrisch angeordnet sein.

Zur Abgabe von Abgas aus der zweiten Kammer kann in der stromabwärtigen Stirnwand in jedem an eine der Leitwände angrenzenden Kammerendbereich der zweiten Kammer jeweils eine Gruppe vorzugsweise mit einer Mehrzahl von im Wesentlichen in Umfangsrichtung aufeinanderfolgenden zweiten Ausströmöffnungen vorgesehen sein.

Auch hier wird eine über den Querschnitt gleichmäßige Mischcharakteristik unterstützt, wenn die in den beiden Kammerendbereichen der zweiten Kammer vorgesehenen Gruppen von zweiten Ausströmöffnungen zu der die Reaktionsmittelabgabelinie und die Gehäuselängsachse enthaltenden Ebene im Wesentlichen spiegelsymmetrisch angeordnet sind.

Zur Unterstützung der Verdampfung von Reaktionsmittel in der ersten Kammer kann die zweite Einströmöffnung zwischen der Trennwand und der Gehäusewand angeordnet sein, und die Trennwand kann im Bereich der zweiten Einströmöffnung zur ersten Kammer hin konkav geformt sein.

Auch hierbei ist es vorteilhaft, wenn die zweite Einströmöffnung zu der die Reaktionsmittelabgabelinie und die Gehäuselängsachse enthaltenden Ebene im Wesentlichen spiegelsymmetrisch angeordnet ist, oder/und wenn die stromaufwärtige Stirnwand oder/und die stromabwärtige Stirnwand zu der die Reaktionsmittelabgabelinie und die Gehäuselängsachse enthaltenden Ebene im Wesentlichen spiegelsymmetrisch ausgebildet ist.

Die Reaktionsmittelabgabelinie kann zu der Gehäuselängsachse im Wesentlichen orthogonal verlaufen, wobei beispielsweise bei rohrartiger Ausgestaltung des Abgasführungsgehäuses die Gehäuselängsachse eine geradlinig sich erstreckenden Linie sein kann.

Die Erfindung betrifft ferner eine Abgasanlage für eine Brennkraftmaschine, umfassend eine erfindungsgemäß aufgebaute Abgas/Reaktionsmittel-Mischanordnung und stromabwärts der Abgas/Reaktionsmittel-Mischanordnung eine SCR-Katalysatoranordnung.

Die vorliegende Erfindung wird nachfolgend mit Bezug auf die beiliegenden Figuren detailliert beschrieben es zeigt:
- Fig. 1: eine prinzipielle Längsschnittansicht einer Abgasanlage mit einer Abgas/Reaktionsm ittel-M ischanordnung;
- Fig. 2: eine Querschnittansicht der Abgasanlage der Fig. 1, geschnitten längs einer Linie II-II in Fig. 1;
- Fig. 3: eine Querschnittansicht der Abgasanlage der Fig. 1, geschnitten längs einer Linie III-III in Fig. 1.

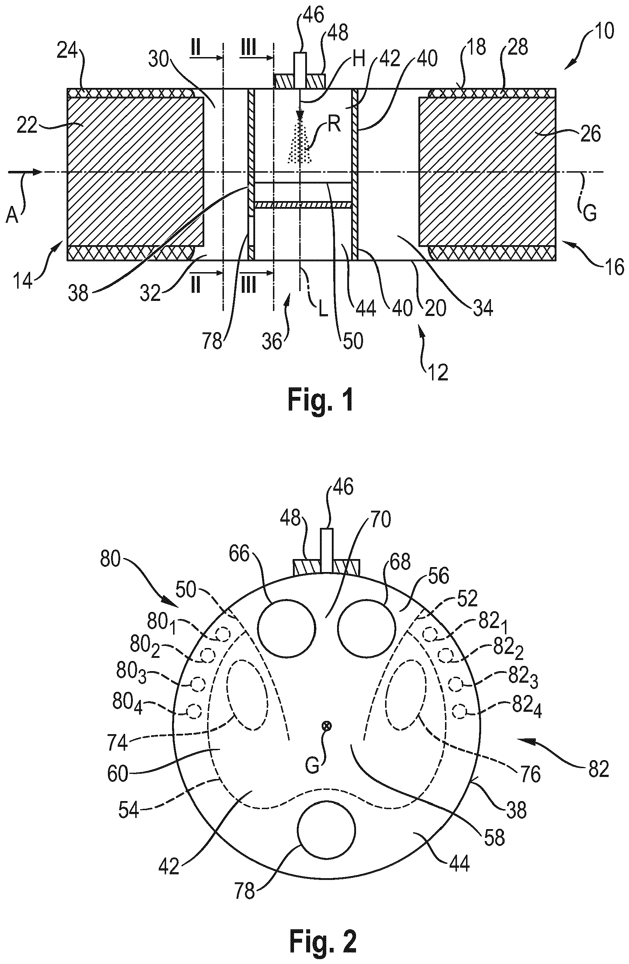

In Fig. 1 ist ein Abschnitt einer allgemein mit 10 bezeichneten Abgasanlage einer Brennkraftmaschine beispielsweise in einem Fahrzeug dargestellt. Diese Abgasanlage 10 umfasst als zentralen Bestandteil eine Abgas/Reaktionsmittel-Mischanordnung 12, die in der Abgasanlage 10 beispielsweise stromabwärts einer Partikelfilteranordnung 14 und stromaufwärts einer SCR-Katalysatoranordnung 16 angeordnet sein kann.

Die Abgas/Reaktionsmittel-Mischanordnung 12 umfasst ein beispielsweise rohrartiges, in Richtung einer Gehäuselängsachse G langgestrecktes Abgasführungsgehäuse 18 mit einer im Wesentlichen zylindrisch und beispielsweise mit kreisrundem Querschnitt ausgebildeten Gehäusewand 20. In diesem Abgasführungsgehäuse 18 kann stromaufwärts bezüglich der Abgas/Reaktionsmittel-Mischanordnung 12 die Partikelfilteranordnung 14 getragen sein. Beispielsweise kann die Partikelfilteranordnung 14 einen monolithisch aufgebauten Partikelfilterblock 22 umfassen, der von einer Fasermatte 24 oder dergleichen umwickelt in dem Abgasführungsgehäuse 18 getragen ist. Auch die stromabwärts der Abgas/Reaktionsmittel-Mischanordnung 12 angeordnete SCR-Katalysatoranordnung 16 kann in dem Abgasführungsgehäuse 18 getragen sein und kann einen beispielsweise monolithisch aufgebauten Katalysatorblock 26 umfassen, der durch eine diese umgebende Fasermatte 28 oder dergleichen in dem Abgasführungsgehäuse 18 getragen sein kann.

Es ist darauf hinzuweisen, dass die Abgasanlage 10 bzw. das Abgasführungsgehäuse 18 in mehrere in einer Abgas-Hauptströmungsrichtung A aufeinander folgende und beispielsweise miteinander verbunden Segmente unterteilt sein kann, von welchen beispielsweise eines der Segmente die Partikelfilteranordnung 14 enthalten kann, eines der Segmente die nachfolgend detailliert beschriebene Abgas/Reaktionsmittel-Mischanordnung 12 enthalten bzw. bereitstelen kann, und eines der Segmente die SCR-Katalysatoranordnung 16 enthalten kann.

In dem Abgasführungsgehäuse 18 ist ein von Abgas im Wesentlichen in der Abgas-Hauptströmungsrichtung durchströmbarer Abgaskanal 30 gebildet, wobei der Kanal 30 einen stromaufwärts bezüglich der Abgas/Reaktionsmittel-Mischanordnung 12 liegenden Kanalbereich 32 und einen stromabwärts bezüglich der Abgas/Reaktionsmittel-Mischanordnung 12 liegenden Kanalbereich 34 aufweist.

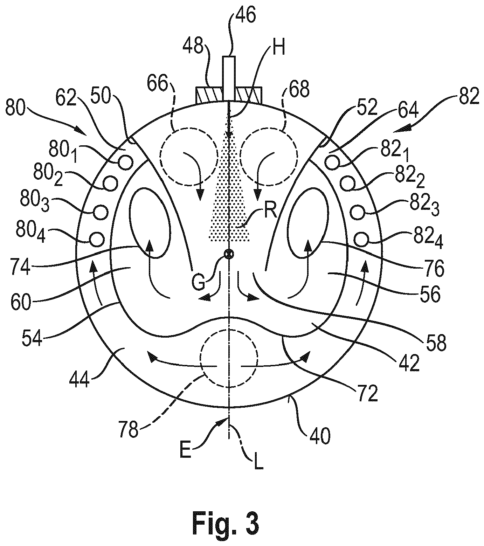

Die Fig. 2 zeigt eine eine Mischzone 36 in Richtung stromaufwärts, also zum Kanalbereich 32 begrenzende stromaufwärtige Stirnwand 38 betrachtet in der Abgas-Hauptströmungsrichtung A. Gleichermaßen zeigt die Fig. 3 eine in der Abgas-Hauptströmungsrichtung A betrachtete und die Mischzone 36 in Richtung stromabwärts, also zum Kanalbereich 34 begrenzenden und bezüglich der stromaufwärtigen Stirnwand 38 in Richtung stromabwärts entlang der Gehäuselängsachse G versetzt angeordnete stromabwärtige Stirnwand 40.

In Richtung der Gehäuselängsachse G sind zwischen den beiden Stirnwänden 38, 40 zwei Kammern 42, 44 der Mischzone 36 gebildet. Ferner ist in Zuordnung zu der Mischzone 36 eine allgemein auch als Injektor bezeichnete Reaktionsmittelabgabeanordnung 46 vorgesehen, die beispielsweise vermittels eines Stutzens 48 an der Gehäusewand 20 des Abgasführungsgehäuses 18 getragen ist und dazu ausgebildet ist, ein Reaktionsmittel R beispielsweise in Form eines Sprühkegels in einer Reaktionsmittel-Hauptabgaberichtung H in die Mischzone 36 abzugeben. Dabei kann die Reaktionsmittel-Hauptabgaberichtung H entlang einer Reaktionsmittelabgabelinie L orientiert sein, welche bezüglich der Gehäuselängsachse G orthogonal angeordnet sein kann und mit dieser beispielsweise eine der Zeichenebene der Fig. 1 entsprechende Ebene aufspannen kann. Die Reaktionsmittel-Hauptabgaberichtung H kann beispielsweise der Mittenlinie eines von der Reaktionsmittelabgabeanordnung 46 abgegebenen Sprühkegels des Reaktionsmittels R entsprechen.

Es sei darauf hingewiesen, dass nicht notwendigerweise die verschiedenen vorangehend angesprochenen Richtungen bzw. Linien exakt orthogonal zueinander angeordnet sein müssen bzw. einander entsprechen müssen. So kann beispielsweise die Reaktionsmittelabgabeanordnung 46 so am Abgasführungsgehäuse 18 getragen sein, dass beispielsweise die Reaktionsmittel-Hauptabgaberichtung H in der Zeichenebene der Fig. 1 bezüglich der dargestellten, zur Geäuselängsachse G im Wesentlichen orthogonalen Ausrichtung beispielsweise entgegen der Abgas-Hauptströmungsrichtung A oder mit der Abgas-Hauptströmungsrichtung A angestellt orientiert ist. Auch eine Orientierung aus der Zeichenebene heraus ist grundsätzlich möglich. Die Reaktionsmittelabgabelinie L kann dabei grundsätzlich als eine Linie betrachtet werden, welche den Ort, an welchem im Bereich der Gehäusewandung 20 das Reaktionsmittel R in die Mischzone 36 eingespritzt wird, mit der Gehäuselängsachse G verbindet.

Die beiden Kammern 42, 44 der Mischzone 36 sind zwischen den beiden Stirnwänden 38, 40 durch zwei Leitwände 50, 52 und eine Trennwand 54 voneinander getrennt. Die Leitwände 50, 52 und die Trennwand 54 erstrecken sich im Wesentlichen in Richtung der Gehäuselängsachse G zwischen den Stirnwänden 38, 40 und können an diese stumpf anstoßen bzw. mit diesen beispielsweise durch Verschweißen oder Verlöten verbunden sein.

Die beiden Leitwände 50, 52 erstrecken sich beidseits der Reaktionsmittelabgabelinie L und somit auch beidseits der Reaktionsmittelabgabeanordnung 46 zueinander bezüglich einer durch die Reaktionsmittelabgabelinie L und die Gehäuselängsachse G aufgespannten und zur Zeichenebene der Fig. 3 orthogonalen Ebene E im Wesentlichen spiegelsymmetrisch und verlaufen, ausgehend von der Gehäusewand 20, zum Bilden einer trichterartigen Gestalt eines ersten Kammerbereichs 56 der ersten Kammer 42 aufeinander zu und enden im Bereich einer Übergangsöffnung 58. Im Bereich dieser Übergangsöffnung 58 geht der erste Kammerbereich 56 in einen zweiten Kammerbereich 60 der ersten Kammer 32 über. Ebenso wie der erste Kammerbereich 56 ist auch der zweite Kammerbereich 60 zur Ebene E im Wesentlichen spiegelsymmetrisch ausgestaltet und führt in Umfangsrichtung beidseits der Reaktionsmittelabgabelinie L von der Reaktionsmittelabgabelinie L entlang der Trennwand 54 weg.

Die Trennwand 54 trennt die erste Kammer 42, insbesondere den zweiten Kammerbereich 60 der ersten Kammer 42, von der in weiten Bereichen in Umfangsrichtung die erste Kammer 42 radial außen umgebenden zweiten Kammer 40. Diese erstreckt sich, ausgehend von der Reaktionsmittelabgabelinie L bzw. der Ebene E, im Wesentlichen spiegelsymmetrisch zu dieser jeweils zu Kammerendbereichen 62, 64, wo die zweite Kammer 44 durch die an die Gehäusewand 20 anschließenden Trennwände 50, 52 in Umfangsrichtung und somit auch zum ersten Kammerbereich 56 der ersten Kammer 42 begrenzt ist. Somit ist in weiten Bereichen die erste Kammer 42 radial außen von der zweiten Kammer 44 umgeben und nach außen hin thermisch abgeschirmt.

In der stromaufwärtigen Stirnwand 38 sind exzentrisch zur Gehäuselängsachse G in einem der Reaktionsmittelabgabeanordnung 46 nahe liegenden Bereich beidseits der Reaktionsmittelabgabelinie L bzw. der durch diese auch aufgespannten Ebene E erste Einströmöffnungen 66, 68 angeordnet. Durch die ersten Einströmöffnungen 66, 68 hindurch tritt der im Wesentlichen in der Abgas-Hauptströmungsrichtung A heranströmende bzw. auch aus der Partikelfilteranordnung 14 austretende Abgasstrom aus dem Kanalbereich 32 in die erste Kammer 42, insbesondere den ersten Kammerbereich 56 derselben ein. Die beiden ersten Einströmöffnungen 66, 68 sind so positioniert, dass ein zwischen diesen gebildeter Steg 70 der stromaufwärtigen Stirnwand 38 den von der Reaktionsmittelabgabeanordnung 46 abgegebenen Strom des Reaktionsmittels R überdeckt bzw. gegen den Abgasstrom abschirmt. Das Abgas tritt somit beidseits des Reaktionsmittelstroms bzw. des von der Reaktionsmittelabgabeanordnung 46 abgegebenen Sprühkegels in den ersten Kammerbereich 56 ein und vermischt sich bereits dort mit dem Reaktionsmittel R. Das Abgas und das Reaktionsmittel R strömen dann weiter durch die Übergangsöffnung 58 in den zweiten Kanalbereich 60. Der Übergangsöffnung 58 liegt ein in Richtung zum ersten Kammerbereich 52 konkav geformter Wölbungsbereich 72 der Trennwand 54 gegenüber. Durch diesen Wölbungsbereich 72 wird der Strom aus Abgas und Reaktionsmittel R zu beiden Seiten bezüglich der Reaktionsmittelabgabelinie L bzw. der Ebene E abgelenkt in die beidseits der Ebene E sich erstreckenden Abschnitte des zweiten Kammerbereichs 60.

In dem diese Abschnitte überdeckenden Bereichen weist die stromabwärtige Stirnwand 40 beidseits der Reaktionsmittelabgabelinie L bzw. der Ebene E jeweils eine erste Ausströmöffnung 74 bzw. 76 auf. Durch diese ersten Ausströmöffnungen 74, 76 strömt das in der ersten Kammer 42 gebildete Gemisch aus Abgas und Reaktionsmittel R aus der Mischzone 36 in den Kanalbereich 34 des Abgaskanals 30 stromabwärts der Mischzone 36 bzw. stromaufwärts der SCR-Katalysatoranordnung 16.

In der stromaufwärtigen Stirnwand 38 ist ferner exzentrisch zur Gehäuselängsachse G und beispielsweise bezüglich der Gehäuselängsachse G den beiden ersten Einströmöffnungen 66, 68 gegenüberliegend eine zweite Einströmöffnung 78 gebildet. Diese liegt im Wesentlichen in einem Bereich zwischen der Gehäusewand 20 und dem Wölbungsbereich 72 der Trennwand 54, so dass in diesem Wölbungsbereich 72 die Trennwand 54 die zweite Einströmöffnung 78 bereichsweise umgebend verläuft. Dadurch wird gewährleistet, dass durch in die zweite Kammer 44 im Bereich der zweiten Einströmöffnung 78 eintretendes Abgas die Trennwand 54 insbesondere in demjenigen Bereich, in welchem das den ersten Kammerbereich 56 verlassende Gemisch aus Abgas und Reaktionsmittel R auf die Trennwand 54 auftrifft, erwärmt wird. Dadurch wird die Verdampfung von im Abgas mitgeführten Tröpfchen von Reaktionsmittel R beim Auftreffen auf die Trennwand 54 im Wölbungsbereich 72 und somit die verbesserte Durchmischung von Abgas und Reaktionsmittel R unterstützt.

Die zweite Kammer 44 erstreckt sich, ausgehend von der zweiten Einströmöffnung 78, in beiden Umfangsrichtungen entlang der Gehäusewand 20 bzw. der Trennwand 54 zu den Kammerendbereichen 62, 64 und nimmt somit die bereits angesprochene, die erste Kammer 42 in weiten Bereichen nach radial außen abschirmende Konfiguration an. Im Bereich der Kammerendbereiche 62, 64 sind in der stromabwärtigen Stirnwand 40 zwei Gruppen 80, 82 jeweils mit einer Mehrzahl zweiter Ausströmöffnungen 80₁, 80₂, 80₃, 80₄ bzw. 82₁, 82₂, 82₃, 82₄ ausgebildet. Durch diese näherungsweise in Umfangsrichtung aufeinander folgenden zweiten Ausströmöffnungen 80₁, 80₂, 80₃, 80₄ bzw. 82₁, 82₂, 82₃, 82₄ verlässt das durch die zweite Einströmöffnung 78 in die zweite Kammer 40 eintretende Abgas die zweite Kammer 40 in Richtung zum Kanalbereich 34 und vermischt sich dort mit dem durch die ersten Ausströmöffnungen 74, 76 gleichermaßen in den Kanalbereich 34 strömenden Gemisch aus Abgas und Reaktionsmittel R.

Mit dem vorangehend beschriebenen Aufbau der Mischzone 36 in der Abgas/Reaktionsmittel-Mischanordnung 12 wird bei axial, also in Richtung der Gehäuselängsachse G bzw. der Abgas-Hauptströmungsrichtung A kompakter Bauweise eine effiziente Durchmischung von Abgas und Reaktionsmittel R erreicht, wobei durch die Anordnung der beiden Kammern 42, 44 der Mischzone 36 zueinander derjenige Bereich, in welchen das Reaktionsmittel R eingespritzt wird, durch den die zweite Kammer 44 durchströmenden Teil des im Abgaskanal 30 strömenden Abgases effizient nach außen abgeschirmt wird. Somit ist die Gefahr, dass an der Trennwand 54 bzw. auch den Leitwänden 50, 52 vor allem bei vergleichsweise niedriger Umgebungstemperatur Reaktionsmittel R kondensiert und Ablagerungen bildet, deutlich gemindert. Gleichzeitig wird durch die Umlenkung des Abgasstroms in der ersten Kammer 42 beim Eintreten durch die ersten Einströmöffnungen 66, 68 in diese, beim Durchströmen der Übergangsöffnung 58, beim Strömen entlang des zweiten Kammerbereichs 60 und beim Austritt durch die ersten Ausströmöffnungen 74, 76 und die dabei entstehenden Verwirbelungen eine effiziente Durchmischung des Abgases mit dem in dieses eingespritzten Reaktionsmittel R erzwungen. Diese Durchmischung wird dadurch unterstützt, dass der Aufbau der Mischzone 36 bzw. der beiden Stirnwände 38, 40 und der Leitwände 50, 52 bzw. auch der Trennwand 54 zur Reaktionsmittelabgabelinie L bzw. der von dieser auch aufgespannten Ebene E im Wesentlichen spiegelsymmetrisch ausgebildet ist. Dadurch wird vor allem bei niedrigen Umgebungstemperaturen eine verbesserte Abgasreinigung in der SCR-Katalysatoranordnung 16 im Kaltstart und bei niedrigen Lastpunkten erreicht, in welchen insbesondere am Beginn eines Verbrennungsbetriebs einer Brennkraftmaschine auch der von dieser ausgestoßene Abgasstrom noch eine vergleichsweise niedrige Temperatur aufweist.

Es sei abschließend darauf hingewiesen, dass die Prinzipien der vorliegenden Erfindung selbstverständlich auch Anwendung finden können, wenn von den vorangehend mit Bezug auf die Fig. 1 bis 3 dargestellten Prinzipien in verschiedenen Bereichen abgewichen wird. So kann beispielsweise in Zuordnung zur ersten Kammer 42 beidseits der Reaktionsmittelabgabelinie L jeweils mehr als eine erste Eingabeöffnung vorgesehen sein, wobei auch in diesem Falle vorzugsweise eine bezüglich der Reaktionsmittelabgabelinie L symmetrische Anordnung gewählt wird. Entsprechendes gilt auch für die aus der ersten Kammer 42 heraus führenden ersten Ausströmöffnungen 74, 76. Gleichermaßen kann die Anzahl der zweiten Ausströmöffnungen in den beiden Gruppen 80, 82 von der dargestellten Anzahl abweichen. Beispielsweise könnte eine oder jede dieser Gruppen auch nur eine einzige zweite Ausströmöffnung aufweisen. Anstelle der einzigen zur Reaktionsmittelabgabelinie L im Wesentlichen spiegelsymmetrisch angeordneten zweiten Einströmöffnung 78 könnten auch mehrere beispielsweise zur Reaktionsmittelabgabelinie L bzw. zur Ebene E spiegelsymmetrisch angeordnete zweite Einströmöffnungen vorgesehen sein.

Weiter ist darauf hinzuweisen, dass die vorangehend beschriebenen Ausgestaltungsprinzipien vor allem dann in vorteilhafter Weise Anwendung finden können, wenn die Mischzone 36 bzw. das Abgasführungsgehäuse 18 die in den Figuren dargestellte kreisrunde Außenumfangskontur aufweist. Grundsätzlich könnte die Mischzone 36 bzw. das Abgasführungsgehäuse 18 jedoch auch eine andere, beispielsweise eine abgeflacht runde Querschnittsgeometrie, wie z. B. eine elliptische Querschnittsgeometrie, aufweisen, wobei dann gleichermaßen eine im Wesentlichen symmetrische Ausgestaltung zu einer beispielsweise der kurzen Halbachse einer elliptischen Kontur entsprechenden Reaktionsmittelabgabelinie vorgesehen sein kann. Auch Abweichungen von einer exakten symmetrischen Struktur sind möglich, beispielsweise dadurch, dass die beidseits der Reaktionsmitteleingabelinie L angeordneten, einander aber entsprechenden Öffnungen zueinander unterschiedliche Formen oder/und Größen bzw. unterschiedliche Abstände zur Reaktionsmittelabgabelinie L bzw. zur Ebene E aufweisen.

Die verschiedenen die Mischzone 36 bildenden Wände, also die beiden Stirnwände 38, 40 und die Leitwände 50, 52 sowie auch die Trennwand 54, können dort, wo diese aneinander anstoßen, beispielsweise durch Verlötung oder Verschweißung punktuell oder entlang des gesamten Kontaktbereichs miteinander fest verbunden sein. Gleichermaßen können die Leitwände 50, 52 dort, wo sie an die Gehäusewand 20 anschließen, mit dieser punktuell oder entlang des gesamten Kontaktbereichs durch Verlötung oder Verschweißung verbunden sein, so dass die beiden Kammern 42, 44 strömungstechnisch im Wesentlichen voneinander getrennt sind. Eine vollständig gasdichte Trennung dieser beiden Kammern 42, 44 ist jedoch nicht zwingend erforderlich, wenngleich dies zum Vermeiden, dass Reaktionsmittel R in die zweite Kammer 44 gelangt, vorteilhaft sein kann.

## Patentansprüche

1. Abgas/Reaktionsmittel-Mischanordnung für eine Abgasanlage einer Brennkraftmaschine zur Durchmischung von Abgas und Reaktionsmittel umfassend:
- ein in Richtung einer Gehäuselängsachse (G) sich erstreckendes Abgasführungsgehäuse (18) mit einer Gehäusewand (20), wobei in dem Abgasführungsgehäuse (18) ein von der Gehäusewand (20) umgebener und von Abgas durchströmbarer Abgaskanal (30) gebildet ist,
- ein zwischen einer stromaufwärtigen Stirnwand (38) und einer stromabwärts bezüglich der stromaufwärtigen Stirnwand (38) angeordneten stromabwärtigen Stirnwand (40) gebildete Mischzone (36), wobei die Mischzone (36) eine erste Kammer (42) und eine zweite Kammer (44) umfasst,
- eine an dem Abgasführungsgehäuse (18) getragene Reaktionsmittelabgabeanordnung (46) zur Abgabe von Reaktionsmittel (R) in die erste Kammer (42) in einer im Wesentlichen entlang einer Reaktionsmittelabgabelinie (L) orientierten Reaktionsmittel-Hauptabgaberichtung (H),
wobei in der stromaufwärtigen Stirnwand (38) wenigstens eine erste Einströmöffnung (66, 68) vorgesehen ist, wobei über die wenigstens eine erste Einströmöffnung (66, 68) ein stromaufwärts bezüglich der stromaufwärtigen Stirnwand (38) liegender Bereich (32) des Abgaskanals (30) zu der ersten Kammer (42) offen ist,
wobei in der stromaufwärtigen Stirnwand (38) wenigstens eine zweite Einströmöffnung (78) vorgesehen ist, wobei über die wenigstens eine zweite Einströmöffnung (78) der stromaufwärts bezüglich der stromaufwärtigen Stirnwand (38) liegende Bereich (32) des Abgaskanals (30) zu der zweiten Kammer (44) offen ist,
wobei in der stromabwärtigen Stirnwand (40) wenigstens eine erste Ausströmöffnung (74, 76) vorgesehen ist, wobei über die wenigstens eine erste Ausströmöffnung (74, 76) die erste Kammer (42) zu einem stromabwärts bezüglich der stromabwärtigen Stirnwand (40) liegenden Bereich (34) des Abgaskanals (30) offen ist,
wobei in der stromabwärtigen Stirnwand (40) wenigstens eine zweite Ausströmöffnung (80₁, 80₂, 80₃, 80₄, 82₁, 82₂, 82₃, 82₄) vorgesehen ist, wobei über die wenigstens eine zweite Ausströmöffnung (80₁, 80₂, 80₃, 80₄, 82₁, 82₂, 82₃, 82₄) die zweite Kammer (44) zu dem stromabwärts bezüglich der stromabwärtigen Stirnwand (40) liegenden Bereich (34) des Abgaskanals (30) offen ist,
**dadurch gekennzeichnet, dass** zwischen der ersten Kammer (42) und der zweiten Kammer (44) im Wesentlichen keine Strömungsverbindung besteht.

2. Abgas/Reaktionsmittel-Mischanordnung nach Anspruch 1, **dadurch gekennzeichnet, dass** in der stromaufwärtigen Stirnwand (38) wenigstens zwei erste Einströmöffnungen (66, 68) vorgesehen sind, wobei in Umfangsrichtung beidseits der Reaktionsmittelabgabelinie (L) jeweils wenigstens eine erste Einströmöffnung (66, 68) vorgesehen ist.

3. Abgas/Reaktionsmittel-Mischanordnung nach Anspruch 2, **dadurch gekennzeichnet, dass** die in Umfangsrichtung beidseits der Reaktionsmittelabgabelinie (L) vorgesehenen ersten Einströmöffnungen (66, 68) zu einer die Reaktionsmittelabgabelinie (L) und die Gehäuselängsachse (G) enthaltenden Ebene (E) im Wesentlichen spiegelsymmetrisch angeordnet sind.

4. Abgas/Reaktionsmittel-Mischanordnung nach einem der vorangehenden Ansprüche, **dadurch gekennzeichnet, dass** in der stromabwärtigen Stirnwand (40) wenigstens zwei erste Ausströmöffnungen (74, 76) vorgesehen sind, wobei in Umfangsrichtung beidseits der Reaktionsmittelabgabelinie (L) jeweils wenigstens eine erste Ausströmöffnung (74, 76) vorgesehen ist.

5. Abgas/Reaktionsmittel-Mischanordnung nach Anspruch 4, **dadurch gekennzeichnet, dass** die in Umfangsrichtung beidseits der Reaktionsmittelabgabelinie (L) vorgesehenen ersten Ausströmöffnungen (74, 76) zu der die Reaktionsmittelabgabelinie (L) und die Gehäuselängsachse (G) enthaltenden Ebene (E) im Wesentlichen spiegelsymmetrisch angeordnet sind.

6. Abgas/Reaktionsmittel-Mischanordnung nach Anspruch 2 und Anspruch 4 oder 5, **dadurch gekennzeichnet, dass** in Umfangsrichtung an wenigstens einer, vorzugsweise jeder Seite der Reaktionsmittelabgabelinie (L) die ersten Einströmöffnungen (66, 68) näher an der Reaktionsmittelabgabelinie (L) angeordnet sind, als die ersten Ausströmöffnungen (74, 76), oder/und dass in Umfangsrichtung an wenigstens einer, vorzugsweise jede Seite der Reaktionsmittelabgabelinie (L) zwischen den ersten Einströmöffnungen (66, 68) und den ersten Ausströmöffnungen (74, 76) jeweils eine zwischen der stromaufwärtigen Stirnwand (40) und der stromabwärtigen Stirnwand (38) sich erstreckende, vorzugsweise an die Gehäusewand (20) anschließende Leitwand (50, 52) angeordnet ist.

7. Abgas/Reaktionsmittel-Mischanordnung nach Anspruch 6, **dadurch gekennzeichnet, dass** zwischen den in Umfangsrichtung beidseits der Reaktionsmittelabgabelinie (L) angeordneten Leitwänden (50, 52) ein in der Reaktionsmittel-Hauptabgaberichtung (H) sich verjüngender erster Kammerbereich (56) der ersten Kammer (42) gebildet ist, wobei der erste Kammerbereich (56) an einer Übergangsöffnung (58) zu einem zweiten Kammerbereich (60) der ersten Kammer (42) offen ist, wobei der zweite Kammerbereich (60) ausgehend von der Übergangsöffnung (58) zwischen dem ersten Kammerbereich (56) und dem zweiten Kammerbereich (60) beidseits der Reaktionsmittelabgabelinie (L) zu den ersten Ausströmöffnungen (74, 76) führt.

8. Abgas/Reaktionsmittel-Mischanordnung nach Anspruch 7, **dadurch gekennzeichnet, dass** der erste Kammerbereich (56) oder/und der zweite Kammerbereich (60) zu der die Reaktionsmittelabgabelinie (L) und die Gehäuselängsachse (G) enthaltenden Ebene (E) im Wesentlichen spiegelsymmetrisch angeordnet ist.

9. Abgas/Reaktionsmittel-Mischanordnung nach einem der vorangehenden Ansprüche, **dadurch gekennzeichnet, dass** eine die erste Kammer (42) von der zweiten Kammer (44) trennende, zwischen der stromaufwärtigen Stirnwand (38) und der stromabwärtigen Stirnwand (40) sich erstreckende Trennwand (54) vorgesehen ist, vorzugsweise wobei die Trennwand (54) die erste Kammer (42) nach radial außen zur zweiten Kammer (44) begrenzt.

10. Abgas/Reaktionsmittel-Mischanordnung nach Anspruch 6 und Anspruch 9, **dadurch gekennzeichnet, dass** die Trennwand (54) sich zwischen den Leitwänden (50, 52) im Wesentlichen in Umfangsrichtung entlang der Gehäusewand (20) erstreckt, oder/und dass die Trennwand (54) zu der die Reaktionsmittelabgabelinie (L) und die Gehäuselängsachse (G) enthaltenden Ebene (E) im Wesentlichen spiegelsymmetrisch angeordnet ist.

11. Abgas/Reaktionsmittel-Mischanordnung nach Anspruch 10, **dadurch gekennzeichnet, dass** in der stromabwärtigen Stirnwand (54) in jedem an eine der Leitwände (50, 52) angrenzenden Kammerendbereich (62, 64) der zweiten Kammer (44) jeweils eine Gruppe (80, 82) vorzugsweise mit einer Mehrzahl von im Wesentlichen in Umfangsrichtung aufeinander folgenden zweiten Ausströmöffnungen (80₁, 80₂, 80₃, 80₄, 82₁, 82₂, 82₃, 82₄) vorgesehen ist.

12. Abgas/Reaktionsmittel-Mischanordnung nach Anspruch 11, **dadurch gekennzeichnet, dass** die in den beiden Kammerendbereichen (62, 64) der zweiten Kammer vorgesehenen Gruppen (80, 82) von zweiten Ausströmöffnungen (80₁, 80₂, 80₃, 80₄, 82₁, 82₂, 82₃, 82₄) zu der die Reaktionsmittelabgabelinie (L) und die Gehäuselängsachse (G) enthaltenden Ebene (E) im Wesentlichen spiegelsymmetrisch angeordnet sind.

13. Abgas/Reaktionsmittel-Mischanordnung nach einem der Ansprüche 9-12, **dadurch gekennzeichnet, dass** die zweite Einströmöffnung (78) zwischen der Trennwand (54) und der Gehäusewand (20) angeordnet ist, und dass die Trennwand (54) im Bereich der zweiten Einströmöffnung (78) zur ersten Kammer (42) hin konkav geformt ist.

14. Abgas/Reaktionsmittel-Mischanordnung einem der vorangehenden Ansprüche, **dadurch gekennzeichnet, dass** die zweite Einströmöffnung (78) zu der die Reaktionsmittelabgabelinie (L) und die Gehäuselängsachse (G) enthaltenden Ebene (E) im Wesentlichen spiegelsymmetrisch angeordnet ist, oder/und dass die stromaufwärtige Stirnwand (38) oder/und die stromabwärtige Stirnwand (40) zu der die Reaktionsmittelabgabelinie (L) und die Gehäuselängsachse (G) enthaltenden Ebene (E) im Wesentlichen spiegelsymmetrisch ausgebildet ist, oder/und dass die Reaktionsmittelabgabelinie (L) zu der Gehäuselängsachse (G) im Wesentlichen orthogonal verläuft.

15. Abgasanlage für eine Brennkraftmaschine, umfassend eine Abgas/Reaktionsmittel-Mischanordnung (12) nach einem der vorangehenden Ansprüche und stromabwärts der Abgas/Reaktionsmittel-Mischanordnung (12) eine SCR-Katalysatoranordnung (16).

## Claims

1. An exhaust gas/reactant mixing arrangement for an exhaust system of an internal combustion engine for mixing exhaust gas and reactant, comprising:
- an exhaust gas guide housing (18), extending in the direction of a housing longitudinal axis (G), having a housing wall (20), wherein an exhaust gas duct (30) which is surrounded by the housing wall (20) and through which exhaust gas is able to flow is formed in the exhaust gas guide housing (18),
- a mixing zone (36) formed between an upstream end wall (38) and a downstream end wall (40) arranged downstream of the upstream end wall (38), wherein the mixing zone (36) comprises a first chamber (42) and a second chamber (44),
- a reactant dispensing arrangement (46), carried on the exhaust gas guide housing (18), for dispensing reactant (R) into the first chamber (42) in a reactant main dispensing direction (H) oriented substantially along a reactant dispensing line (L),
wherein at least one first inflow opening (66, 68) is provided in the upstream end wall (38), wherein, via the at least one first inflow opening (66, 68), a region (32) of the exhaust gas duct (30) that lies upstream of the upstream end wall (38) is open toward the first chamber (42),
wherein at least one second inflow opening (78) is provided in the upstream end wall (38), wherein, via the at least one second inflow opening (78), the region (32) of the exhaust duct (30) that lies upstream of the upstream end wall (38) is open toward the second chamber (44),
wherein at least one first outflow opening (74, 76) is provided in the downstream end wall (40), wherein, via the at least one first outflow opening (74, 76), the first chamber (42) is open toward a region (34) of the exhaust duct (30) that lies downstream of the downstream end wall (40),
wherein at least one second outflow opening (80₁, 80₂, 80₃, 80₄, 82₁, 82₂, 82₃, 82₄) is provided in the downstream end wall (40), wherein, via the at least one second outflow opening (80₁, 80₂, 80₃, 80₄, 82₁, 82₂, 82₃, 82₄), the second chamber (44) is open toward the region (34) of the exhaust duct (30) that lies downstream of the downstream end wall (40),
**characterized in that** there is substantially no fluidic connection between the first chamber (42) and the second chamber (44).

2. The exhaust gas/reactant mixing arrangement as claimed in claim 1, **characterized in that** at least two first inflow openings (66, 68) are provided in the upstream end wall (38), wherein in each case at least one first inflow opening (66, 68) is provided on both sides of the reactant dispensing line (L) in the circumferential direction.

3. The exhaust gas/reactant mixing arrangement as claimed in claim 2, **characterized in that** the first inflow openings (66, 68) provided on both sides of the reactant dispensing line (L) in the circumferential direction are arranged substantially mirror-symmetrically to a plane (E) containing the reactant dispensing line (L) and the housing longitudinal axis (G).

4. The exhaust gas/reactant mixing arrangement as claimed in one of the preceding claims, **characterized in that** at least two first outflow openings (74, 76) are provided in the downstream end wall (40), wherein in each case at least one first outflow opening (74, 76) is provided on both sides of the reactant dispensing line (L) in the circumferential direction.

5. The exhaust gas/reactant mixing arrangement as claimed in claim 4, **characterized in that** the first outflow openings (74, 76) provided on both sides of the reactant dispensing line (L) in the circumferential direction are arranged substantially mirror-symmetrically to the plane (E) containing the reactant dispensing line (L) and the housing longitudinal axis (G).

6. The exhaust gas/reactant mixing arrangement as claimed in claim 2 and claim 4 or 5, **characterized in that**, on at least one, preferably each side of the reactant dispensing line (L) in the circumferential direction, the first inflow openings (66, 68) are arranged closer to the reactant dispensing line (L) than the first outflow openings (74, 76), and/or **in that**, on at least one, preferably each side of the reactant dispensing line (L) in the circumferential direction, in each case one baffle (50, 52) extending between the upstream end wall (40) and the downstream end wall (38) and preferably adjoining the housing wall (20) is arranged between the first inflow openings (66, 68) and the first outflow openings (74, 76).

7. The exhaust gas/reactant mixing arrangement as claimed in claim 6, **characterized in that** a first chamber region (56), narrowing in the reactant main dispensing direction (H), of the first chamber (42) is formed between the baffles (50, 52) arranged on both sides of the reactant dispensing line (L) in the circumferential direction, wherein the first chamber region (56) is open toward a second chamber region (60) of the first chamber (42) at a transition opening (58), wherein the second chamber region (60), starting from the transition opening (58) between the first chamber region (56) and the second chamber region (60), leads on both sides of the reactant dispensing line (L) to the first outflow openings (74, 76).

8. The exhaust gas/reactant mixing arrangement as claimed in claim 7, **characterized in that** the first chamber region (56) and/or the second chamber region (60) is/are arranged substantially mirror-symmetrically to the plane (E) containing the reactant dispensing line (L) and the housing longitudinal axis (G).

9. The exhaust gas/reactant mixing arrangement as claimed in one of the preceding claims, **characterized in that** a partition wall (54) that separates the first chamber (42) from the second chamber (44) and extends between the upstream end wall (38) and the downstream end wall (40) is provided, preferably wherein the partition wall (54) delimits the first chamber (42) radially on the outside with respect to the second chamber (44).

10. The exhaust gas/reactant mixing arrangement as claimed in claim 6 and claim 9, **characterized in that** the partition wall (54) extends between the baffles (50, 52) substantially in the circumferential direction along the housing wall (20), and/or wherein the partition wall (54) is arranged substantially mirror-symmetrically to the plane (E) containing the reactant dispensing line (L) and the housing longitudinal axis (G).

11. The exhaust gas/reactant mixing arrangement as claimed in claim 10, **characterized in that**, in the downstream end wall (54), a respective group (80, 82), preferably with a plurality of second outflow openings (80₁, 80₂, 80₃, 80₄, 82₁, 82₂, 82₃, 82₄) that follow one another substantially in the circumferential direction, is provided in each chamber end region (62, 64), adjoining one of the baffles (50, 52), of the second chamber (44).

12. The exhaust gas/reactant mixing arrangement as claimed in claim 11, **characterized in that** the groups (80, 82) of second outflow openings (80₁, 80₂, 80₃, 80₄, 82₁, 82₂, 82₃, 82₄) provided in the two chamber end regions (62, 64) of the second chamber are arranged substantially mirror-symmetrically to the plane (E) containing the reactant dispensing line (L) and the housing longitudinal axis (G).

13. The exhaust gas/reactant mixing arrangement as claimed in one of claims 9-12, **characterized in that** the second inflow opening (78) is arranged between the partition wall (54) and the housing wall (20), and **in that** the partition wall (54) is concavely shaped toward the first chamber (42) in the region of the second inflow opening (78).

14. The exhaust gas/reactant mixing arrangement as claimed in one of the preceding claims, **characterized in that** the second inflow opening (78) is arranged substantially mirror-symmetrically to the plane (E) containing the reactant dispensing line (L) and the housing longitudinal axis (G), and/or **in that** the upstream end wall (38) and/or the downstream end wall (40) is formed substantially mirror-symmetrically to the plane (E) containing the reactant dispensing line (L) and the housing longitudinal axis (G), and/or **in that** the reactant dispensing line (L) extends substantially orthogonally to the housing longitudinal axis (G).

15. An exhaust system for an internal combustion engine, comprising an exhaust gas/reactant mixing arrangement (12) as claimed in one of the preceding claims and an SCR catalytic converter arrangement (16) downstream of the exhaust gas/reactant mixing arrangement (12).

## Revendications

1. Un dispositif de mélange gaz d'échappement/réactif pour un système d'échappement d'un moteur à combustion interne pour mélanger les gaz d'échappement et le réactif, comprenant :
- un boîtier de guidage des gaz d'échappement (18), s'étendant dans la direction de l'axe longitudinal de boîtier (G), dans lequel une paroi de boîtier (20), dans lequel un conduit de gaz d'échappement (30) entouré par la paroi de boîtier (20) et à travers lequel les gaz d'échappement peuvent s'écouler est formé dans le boîtier de guidage des gaz d'échappement (18),
- une zone de mélange (36) formée entre une paroi d'extrémité amont (38) et une paroi d'extrémité aval (40) disposée en aval de la paroi d'extrémité amont (38), dans laquelle la zone de mélange (36) comprend une première chambre (42) et une deuxième chambre (44),
- un dispositif de distribution du réactif (46), monté sur le boîtier de guidage des gaz d'échappement (18), pour distribuer du réactif (R) dans la première chambre (42) dans une direction principale de distribution de réactif (H) orientée sensiblement le long d'une conduite de distribution de réactif (L),
dans lequel au moins une première ouverture d'entrée (66, 68) est prévue dans la paroi d'extrémité amont (38), dans lequel, via au moins une première ouverture d'entrée (66, 68), une région (32) du conduit de gaz d'échappement (30) qui se trouve en amont de la paroi d'extrémité amont (38) est ouverte vers la première chambre (42),
dans lequel au moins une deuxième ouverture d'entrée (78) est prévue dans la paroi d'extrémité amont (38), dans lequel, via au moins une deuxième ouverture d'entrée (78), la région (32) du conduit d'échappement (30) qui se trouve en amont de la paroi d'extrémité amont (38) est ouverte en direction de la deuxième chambre (44),
dans lequel au moins une première ouverture de sortie (74, 76) est prévue dans la paroi d'extrémité aval (40), dans lequel, via ladite au moins une première ouverture de sortie (74, 76), la première chambre (42) est ouverte vers une région (34) du conduit d'échappement (30) située en aval de la paroi d'extrémité aval (40),
dans lequel au moins une deuxième ouverture d'écoulement (80₁, 80₂, 80₃, 80₄, 82₁, 82₂, 82₃, 82₄) est prévue dans la paroi d'extrémité aval (40), dans lequel, via ladite au moins une deuxième ouverture d'écoulement (80₁, 80₂, 80₃, 80₄, 82₁, 82₂, 82₃, 82₄), la deuxième chambre (44) est ouverte vers la région (34) du conduit d'échappement (30) qui se trouve en aval de la paroi d'extrémité aval (40), **caractérisée en ce que** qu'il n'y a pratiquement pas de connexion fluidique entre la première chambre (42) et la deuxième chambre (44).

2. Le dispositif de mélange gaz d'échappement/réactif selon la revendication 1, **caractérisé en ce qu'**au moins deux premières ouvertures d'entrée (66, 68) sont prévues dans la paroi d'extrémité amont (38), dans lequel dans chaque cas au moins une première ouverture d'entrée (66, 68) est prévue des deux côtés de la conduite de distribution de réactif (L) dans la direction circonférentielle.

3. Le dispositif de mélange gaz d'échappement/réactif selon la revendication 2, **caractérisé en ce que** les premières ouvertures d'entrée (66, 68) prévues des deux côtés de la conduite de distribution de réactif (L) dans la direction circonférentielle sont disposées de manière sensiblement symétrique par rapport à un plan (E) contenant la conduite de distribution de réactif (L) et l'axe longitudinal de boîtier (G).

4. Le dispositif de mélange gaz d'échappement/réactif selon l'une des revendications précédentes, **caractérisé en ce qu'**au moins deux premières ouvertures de sortie (74, 76) sont prévues dans la paroi d'extrémité aval (40), dans lequel dans chaque cas au moins une première ouverture de sortie (74, 76) est prévue des deux côtés de la conduite de distribution de réactif (L) dans la direction circonférentielle.

5. Le dispositif de mélange gaz d'échappement/réactif selon la revendication 4, **caractérisé en ce que** les premières ouvertures de sortie (74, 76) prévues des deux côtés de la conduite de distribution de réactif (L) dans la direction circonférentielle sont disposées de manière sensiblement symétrique par rapport au plan (E) contenant la conduite de distribution de réactif (L) et l'axe longitudinal de boîtier (G).

6. Le dispositif de mélange gaz d'échappement/réactif selon la revendication 2 et la revendication 4 ou 5, **caractérisé en ce que**, sur au moins un, de préférence chaque côté de la conduite de distribution de réactif (L) dans la direction circonférentielle, les premières ouvertures d'entrée (66, 68) sont disposées plus près de la conduite de distribution de réactif (L) que les premières ouvertures de sortie (74, 76), et/ou **en ce que**, sur au moins un, de préférence chaque côté de la conduite de distribution de réactif (L) dans la direction circonférentielle, dans chaque cas, un déflecteur (50, 52) s'étendant entre la paroi d'extrémité amont (40) et la paroi d'extrémité aval (38) et de préférence attenant à la paroi de boîtier (20) est disposée entre les premières ouvertures d'entrée (66, 68) et les premières ouvertures de sortie (74, 76).

7. Le dispositif de mélange gaz d'échappement/réactif selon la revendication 6, **caractérisé en ce qu'**une première région de chambre (56), se rétrécissant dans la direction de distribution principale de réactif (H), de la première chambre (42) est formée entre les déflecteurs (50, 52) disposés des deux côtés de la conduite de distribution de réactif (L) dans la direction circonférentielle, dans lequel la première région de chambre (56) est ouverte vers une deuxième région de chambre (60) de la première chambre (42) au niveau d'une ouverture de transition (58), dans lequel la deuxième région de chambre (60), à partir de l'ouverture de transition (58) entre la première région de chambre (56) et la deuxième région de chambre (60), mène des deux côtés de la conduite de distribution de réactif (L) aux premières ouvertures de sortie (74, 76).

8. Le dispositif de mélange gaz d'échappement/réactif selon la revendication 7, **caractérisé en ce que** la première région de chambre (56) et/ou la deuxième région de chambre (60) est/sont disposée(s) de manière sensiblement symétrique par rapport au plan (E) contenant la conduite de distribution de réactif (L) et l'axe longitudinal de boîtier (G).

9. Le dispositif de mélange de gaz d'échappement/réactif selon l'une des revendications précédentes, **caractérisé en ce qu'**une paroi de séparation (54) séparant la première chambre (42) de la deuxième chambre (44) et s'étendant entre la paroi d'extrémité amont (38) et la paroi d'extrémité aval (40) est prévue, de préférence dans lequel la paroi de séparation (54) délimite la première chambre (42) radialement à l'extérieur par rapport à la deuxième chambre (44).

10. Le dispositif de mélange de gaz d'échappement/réactif selon la revendication 6 et la revendication 9, **caractérisé en ce que** la paroi de séparation (54) s'étend entre les déflecteurs (50, 52) sensiblement dans la direction circonférentielle le long de la (20), et/ou **en ce que** la paroi de séparation (54) est disposée sensiblement symétriquement par rapport au plan (E) contenant la conduite de distribution de réactif (L) et l'axe longitudinal de boîtier (G).

11. Le dispositif de mélange gaz d'échappement/réactif selon la revendication 10, **caractérisé en ce que**, dans la paroi d'extrémité aval (54), un groupe respectif (80, 82), de préférence avec une pluralité de deuxièmes ouvertures d'écoulement (80₁, 80₂, 80₃, 80₄, 82₁, 82₂, 82₃, 82₄) qui se suivent sensiblement dans la direction circonférentielle, est prévu dans chaque région d'extrémité de chambre (62, 64), adjacente à l'un des déflecteurs (50, 52), de la deuxième chambre (44).

12. Le dispositif de mélange de gaz d'échappement/réactif selon la revendication 11, **caractérisé en ce que** les groupes (80, 82) de deuxièmes ouvertures d'écoulement (80₁, 80₂, 80₃, 80₄, 82₁, 82₂, 82₃, 82₄) prévues dans les deux régions d'extrémité de chambre (62, 64) de la deuxième chambre sont disposées de manière sensiblement symétrique par rapport au plan (E) contenant la conduite de distribution de réactif (L) et l'axe longitudinal de boîtier (G).

13. Le dispositif de mélange de gaz d'échappement/réactif selon l'une des revendications 9 à 12, **caractérisé en ce que** la deuxième ouverture d'entrée (78) est disposée entre la paroi de séparation (54) et la paroi de boîtier (20), et **en ce que** la paroi de séparation (54) est de forme concave vers la première chambre (42) dans la région de la deuxième ouverture d'entrée (78).

14. Le dispositif de mélange gaz d'échappement/réactif selon l'une des revendications précédentes, **caractérisé en ce que** la deuxième ouverture d'entrée (78) est disposée de manière sensiblement symétrique par rapport au plan (E) contenant la conduite de distribution de réactif (L) et l'axe longitudinal de boîtier (G), et/ou **en ce que** la paroi d'extrémité amont (38) et/ou la paroi d'extrémité aval (40) est formée de manière sensiblement symétrique au plan (E) contenant la conduite de distribution de réactif (L) et l'axe longitudinal de boîtier (G), et/ou **en ce que** la conduite de distribution de réactif (L) s'étend de manière sensiblement orthogonale à l'axe longitudinal de boîtier (G).

15. Un système d'échappement pour un moteur à combustion interne, comprenant un dispositif de mélange gaz d'échappement/réactif (12) selon l'une des revendications précédentes et un dispositif de convertisseur catalytique SCR (16) en aval du dispositif de mélange gaz d'échappement/réactif (12).
